# FASCICULE DE BREVET EUROPEEN

(11) **EP 0 466 629 B1**
(45) Date de publication et mention de la délivrance du brevet: **01.03.1995**
(21) Numéro de dépôt: 91480102.2
(22) Date de dépôt: 09.07.1991
(51) Int. Cl.: G01L 5/10, F16B 31/02

(54) **Dispositif à jauge de contrainte pour mesurer et contrôler la tension d'une courroie**
Vorrichtung mit Dehnungsmessstreifen zum Messen und Prüfen der Riemenspannung
Strain-gauged device for measuring and controlling the tension of a belt

(30) Priorité: 11.07.1990 FR 9009009
(43) Date de publication de la demande: 15.01.1992
(73) Titulaire: SUD EST ELECTRO MECANIQUE S.E.E.M. (S.A.R.L.), F-06610 La Gaude (FR)
(72) Inventeur: Marlier, Jean-Pierre, F-06000 Nice (FR)
(74) Mandataire: Hautier, Jean-Louis

(56) Documents cités:
- AT-B- 381 595
- CH-A- 328 177
- FR-A- 2 617 282
- FR-A- 2 637 372
- US-A- 2 634 650
- US-A- 2 729 134

## Description

L'invention a pour objet un dispositif pour mesurer et contrôler la tension d'une courroie utilisant une déformation constante avec mesure de la force exercée sur un moyen faisant office de jauge de contrainte, la tête de vis du bouton presseur est équipée d'un limiteur de couple.

L'état de la technique peut être défini par les brevets suivants:
- FR-A-2.617.282 : "dispositif pour mesurer et contrôler la tension d'une courroie utilisant une déformation constante avec mesure de la force exercée sur un moyen faisant office de jauge de contrainte".

Le dispositif est composé d'un châssis boîtier sur lequel est montée une presse qui applique une déformation constante sur le support de la jauge de contrainte, ledit support est monté pivotant sur un axe et est en contact, d'une part avec la presse et, d'autre part sur une face de la courroie, ladite courroie à mesurer étant maintenue dans un triangle entre le point de contact avec le support de ladite jauge sur une face et deux galets sur l'autre face, ladite jauge de contrainte est reliée électriquement à un microprocesseur.
- FR-A-2.637.372 : "dispositif pour mesurer et contrôler la tension d'une courroie utilisant une déformation constante avec mesure de la force exercée sur un moyen faisant office de jauge de contrainte".

Il utilise un châssis boîtier sur lequel on obtient une déformation constante avec mesure de la force exercée sur une jauge de contrainte ; le point de contact de la mécanisation de la jauge de contrainte est disposé sur la même face de la courroie que deux galets ou références fixes ; ledit point de contact de la mécanisation de la jauge de la contrainte est disposé entre deux galets ; la mesure ou le contrôle de la tension s'effectue par trois points de contact qui sont deux galets ou références fixes et le point de contact du moyen de mécanisation de la contrainte ; les deux galets se trouvent sur la même face de la courroie, sur l'autre face de la courroie, deux doigts presseurs viennent en regard des deux galets.

D'autres brevets plus éloignés peuvent être cités :
- US-A-3.653.258
- WO-A-8.601.596
- US-A-3.381.527
- US-A-4.287.759

Selon le brevet décrit plus haut, la presse doit appliquer une déformation constante sur le support de la jauge de contrainte qui est monté pivotant sur un axe et qui est en contact, d'une part, avec la presse et, d'autre part, avec la jauge de contrainte. Or, selon le couple de serrage appliqué sur le bouton de la presse, le couple peut être insuffisant. Lorsque le couple est insuffisant :
- la courroie n'est pas plaquée sur les patins de référence
- la flèche obtenue est plus faible que la flèche désirée
- la mesure est erronée.
- AT-B-381.595 : ce brevet décrit un limiteur de couple. De plus, ce limiteur de couple est réglable.
- US-A-2.729.134 : ce brevet décrit un dispositif du type mâchoire pour maintenir des pièces sur lesquelles on doit travailler. Ledit dispositif est composé d'éléments tels que des serre-joints. Ces serre-joints sont des petites presses à main qui sont serrées par des boutons à molettes. Ces boutons de serrage sont équipés d'un limiteur de couple.

A cet effet, le dispositif selon l'invention est pourvu d'un limiteur de couple réglable au niveau de la tête de vis du bouton de la presse.

Le dispositif utilise cinq points de contact : trois points de référence se situant du même côté de la courroie, le point de contact de la mécanisation de la jauge de contrainte et deux galets ou références fixes ; ledit point de contact de la mécanisation de la jauge de contrainte est disposé entre les deux galets, sur l'autre face de la courroie, deux doigts presseurs viennent en regard des galets de manière à positionner ladite courroie sur les points de mesure.

Une pression constante est appliquée par la presse et ses deux doigts presseurs car elle est montée coulissante sur le corps du dispositif et est actionnée par le bouton de réglage de la presse, ledit bouton est pourvu d'un limiteur de couple. Ledit limiteur de couple est réglé en usine.

le limiteur de couple du bouton de réglage de la presse est logé entre le corps du bouton et la tige. Le corps du bouton comporte deux logements qui reçoivent chacun un ressort, l'ouverture de ces logements vient en regard d'une platine, montée coaxialement à l'axe du bouton, et qui est pourvue de deux logements qui sont conçus pour des billes, et ce de manière à ce que les billes s'engagent en partie égale dans les logements du bouton et dans les logements de la platine. Cet engagement des billes entraîne la solidarisation du bouton et de la platine qui est solidaire de l'axe fileté du bouton. Les logements conçus dans la platine comportent un plan incliné qui, lorsque le bouton est en rotation et que la force des ressorts n'est pas suffisante par rapport au couple exercé sur le bouton, permet auxdites billes de sortir des logements de la platine et de désolidariser ainsi le bouton de la platine. Le bouton est ainsi débrayé et tourne à vide.

Une vis de réglage prévue entre le bouton et la platine permet d'ajuster la force de serrage entre les deux pièces et ce, en fonction de la force des ressorts.

Les dessins ci-joints sont donnés à titre d'exemples indicatifs et non limitatifs. Ils représentent un mode de réalisation préféré selon l'invention. Ils permettront de comprendre aisément l'invention.

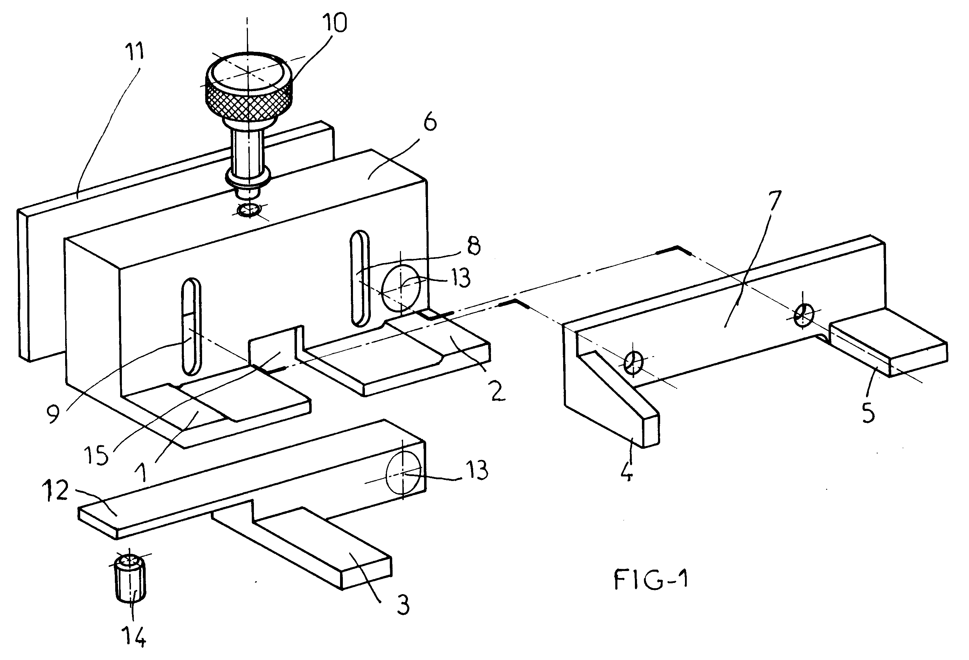

La figure 1 est une vue en perspective du dispositif pour mesurer et contrôler la tension d'une courroie avec une vue éclatée mettant en évidence les différentes pièces qui le constituent, en particulier, la plaque arrière de fermeture, le corps du dispositif, la presse, le support de la jauge de contrainte, qui est une pièce désaxée et qui supporte la patte du point de contact de la jauge de contrainte, enfin la vis de réglage, solidaire du boîtier, qui permet de régler la hauteur du point de contact de la jauge de contrainte (flèche imposée à la courroie).

La figure 2 est une vue de côté du dispositif, côté où l'on introduit la courroie pour mesurer et contrôler la tension.

La figure 3 est une vue du dispositif, vue de dessus.

La figure 4 est une vue en coupe selon l'axe A-A représenté à la figure 2.

La figure 5 est une vue en coupe du dispositif selon l'axe B-B représenté à la figure 2.

La figure 6 est une vue en coupe du bouton de réglage de la pression qui peut être exercée sur la presse, vue en coupe selon l'axe N-N représenté à la figure 4.

La figure 7 est une vue en plan de la platine débarrassée du bouton de réglage.

La figure 8 est une vue en coupe selon l'axe D-D de cette platine.

La figure 9 est une vue en coupe, selon la coupe C-C représentée à la figure 7.

La figure 10 est une vue de dessous de la face du bouton de réglage qui est en regard de la platine. Elle met en évidence les deux logements dans lesquels sont logés les ressorts de mise en appui des billes.

La figure 11 est une vue en coupe de cette même pièce de bouton de réglage, vue en coupe selon l'axe E-E représenté à la figure 10.

Le dispositif selon l'invention utilise cinq points de contact, les points 1,2,3,4,5 : trois points de référence se situant du même côté de la courroie, le point de contact de la mécanisation de la jauge de contrainte est le point de contact 3. Deux galets ou références fixes 1 et 2 sont disposés sur le corps 6 du boîtier du dispositif. Le point de contact 3 de la mécanisation de la jauge de contrainte est disposé entre les deux galets 1 et 2.

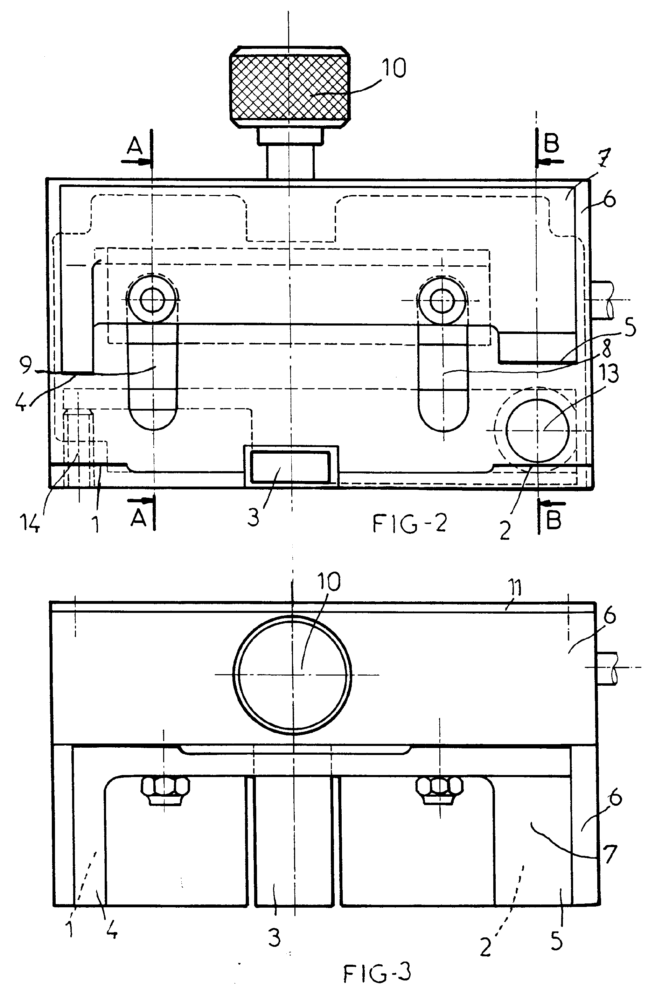

Sur l'autre face de la courroie, deux doigts presseurs 4,5 viennent en regard des galets 1,2 de manière à positionner ladite courroie sur les points de mesure. Il est mis en évidence que les deux doigts presseurs sont montés sur une presse 7 et fixés par des vis dans des trous oblongs 8,9. Cette presse peut être actionnée par le bouton de réglage 10. Le corps 6 du boîtier du dispositif peut être fermé dans sa partie arrière par une plaque de fermeture arrière 11. Le point de contact de la jauge de contrainte est maintenu par un support 12 de la mécanisation de la jauge de contrainte qui est une pièce désaxée, dont l'axe 13 est désaxé par rapport à l'ensemble de la pièce qui comporte une aile perpendiculaire à l'axe longitudinal de cette pièce support 12. Cette aile sort du boîtier par une fenêtre 15 pour venir entre les deux galets 1 et 2 pour faire le troisième contact sur une des faces de la courroie. En regard d'une extrémité d'une aile formée par le support 12, vient une vis de réglage 14. Cette vis de réglage 14 est solidaire du corps 6 du boîtier du dispositif. Cette vis de réglage vient en butée par son extrémité sur l'extrémité de l'aile du support 12, pivotant autour de l'axe 13 de la mécanisation de la jauge de contrainte. Cette vis de réglage 14 permet de régler la hauteur du point du contact 3 de la jauge de contrainte. Bien entendu, ladite jauge de contrainte est reliée électriquement à un microprocesseur intégré dans un autre boîtier afficheur à diodes luminescentes séparé du boîtier du capteur et relié à celui-ci par un cordon électrique. Dans les figures 2 et 3, il est mis en évidence les différents points de contact 1,2,3 sur une face de la courroie, 4 et 5 sur l'autre face. Les points de contact 4 et 5 sont deux doigts presseurs issus de la presse 7, les points de contact 1 et 2 sont des galets ou des butées d'appui solidaires du corps 6 du boîtier. Entre ces deux galets 1 et 2, se trouve le point de contact 3 de la jauge de contrainte. Ce point de contact est monté perpendiculaire à l'axe longitudinal du support, qui est monté à l'intérieur du corps 6 du boîtier, sur un support 12 monté désaxé sur son axe 13, qui lui permet de pivoter et d'être réglé par une vis de réglage 14.

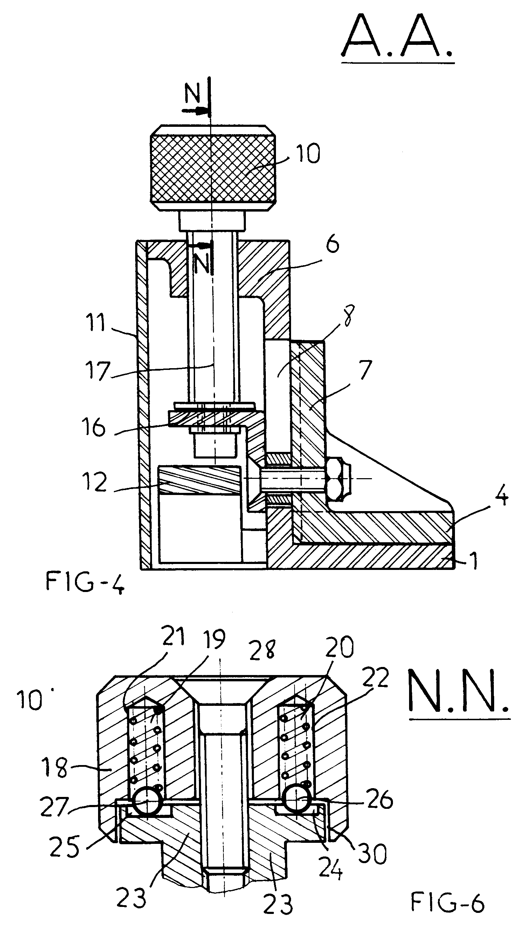

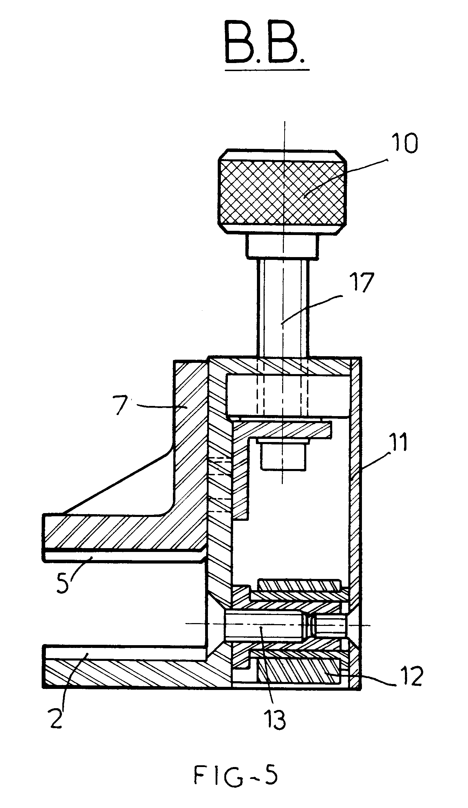

La figure 4 met en évidence le corps du boîtier 6, la plaque de fermeture arrière 11, le bouton de réglage 10. Ce bouton de réglage 10 est solidaire de la presse 7 par des vis qui viennent se fixer sur une pièce en L 16 qui solidarise l'axe 17 du bouton de manoeuvre 10 avec des vis qui passent à travers la presse 7. A l'intérieur du corps 6 du boîtier, on peut voir le support 12 de la jauge de contrainte. Dans cette figure 4, les points de contact 4 et 1 sont en contact. Par contre, dans la figure 5, qui est une vue en coupe dans l'axe B-B de la figure 2, on peut voir que, grâce au bouton de réglage, la presse 7 a été relevée sur le boîtier puisqu'elle coulisse dans les trous oblongs 8,9 et les points de contact 5 et 2 ne sont pas en contact. On observe sur cette figure la vis de fixation et l'axe 13 du support 12 de la jauge de contrainte.

La figure 6 est une vue en coupe de la tête du bouton de réglage 10 mettant en évidence le limiteur de couple.

Dans cette figure 6, le limiteur de couple est disposé à l'intérieur du bouton de réglage 10. Dans le corps 18 du bouton de réglage 10, sont prévus deux logements 19 et 20 dans lesquels sont mis en place des ressorts 21 et 22.

En regard de l'orifice de ces deux logements, est prévue une platine 23 qui comporte également des logements 24 et 25 dans lesquels sont mises en place des billes 26 et 27. La profondeur des logements, la pression des ressorts sont réalisées de manière à ce que les billes se trouvent partiellement engagées dans les logements 19 et 20 du corps 18 du bouton de réglage 10 et également dans les logements 25 et 24 de la platine 23. Cet engagement des billes 26 et 27 permet de rendre solidaire le bouton de réglage 10 avec sa surface extérieure moletée pour augmenter la prise, solidaire de la platine, qui est solidaire de l'axe fileté 17 qui permet de faire monter ou descendre la presse 7. Cette platine 23 est montée coaxialement à l'axe 17 dans un logement 30 prévu à cet effet sous la face inférieure du bouton de réglage 10. Cette platine est maintenue en place contre la face inférieure du bouton de réglage 10 par une vis 28. Cette vis 28 assure la fixation de la platine et du bouton de réglage, mais elle permet également de régler la pression des ressorts contre les billes. Elle permet donc de régler et de tarer l'action du limiteur de couple.

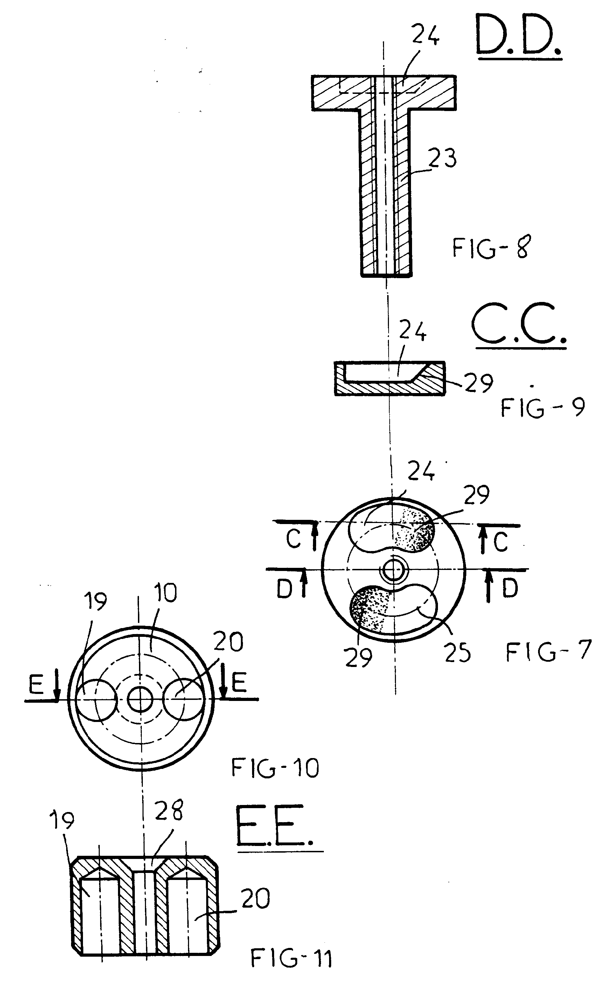

Les figures 7,8,9,10 et 11 mettent en évidence l'action de ce limiteur de couple.

La figure 8 est une vue en coupe longitudinale de la platine 23 qui a une forme en T. Cette platine 23 comporte au moins deux logements 24,25 ; chaque logement comportant, sur une de ses faces, un plan incliné 29 qui permet, lorsque l'effort du couple exercé sur le bouton de réglage 10 est supérieur à l'effort exercé par les ressorts pour maintenir les billes dans leur logement, de permettre aux billes de monter le plan incliné et de désolidariser ainsi le bouton de réglage 10 de la platine 23.Le bouton de réglage tourne alors à vide.

Les figures 9 et 7 mettent en évidence les deux logements 24 et 25 de la platine 23,les plans inclinés 29.

La figure 10 est une vue de dessous du bouton de réglage mettant en évidence les deux logements 19 et 20 qui reçoivent les ressorts 21 et 22.

### REFERENCES

- 1.: point de contact ou galet ou références fixes
- 2.: point de contact ou galet ou références fixes
- 3.: point de contact
- 4.: point de contact ou doigt presseur
- 5.: point de contact ou doigt presseur
- 6.: corps du boîtier
- 7.: presse
- 8.: trous oblongs
- 9.: trous oblongs
- 10.: bouton de réglage
- 11.: plaque de fermeture arrière
- 12.: support de mécanisation
- 13.: axe de la pièce désaxée
- 14.: vis de réglage
- 15.: fenêtre
- 16.: pièce en L
- 17.: axe du bouton
- 18.: corps du bouton
- 19.20.: logement
- 21.22.: ressort
- 23.: platine
- 24.25.: logement de la platine
- 26.27.: billes
- 28.: vis
- 29.: plan incliné
- 30.: logement

## Revendications

1. Dispositif pour mesurer et contrôler la tension d'une courroie utilisant une déformation constante avec mesure de la force exercée sur une jauge de contrainte du type utilisant cinq points de contact (1,2,3,4,5) : trois points de référence (1,2,3) se situant du même côté de la courroie, le point de contact (3) de la mécanisation de la jauge de contrainte et deux galets ou références fixes (2,3) ; ledit point de contact (3) de la mécanisation de la jauge de contrainte est disposé entre les deux galets (1,2), sur l'autre face de la courroie, deux doigts presseurs (4,5) viennent en regard des galets (1,2) de manière à positionner ladite courroie sur les points de mesure ; une pression constante est appliquée par la presse (7) et ses deux doigts presseurs (4,5) car elle est montée coulissante sur le corps (6) du dispositif et est actionnée par le bouton de réglage (10) de la presse (7) caractérisé par le fait
que ledit bouton (10) est pourvu d'un limiteur de couple réglable est logé entre le corps (18) du bouton (10) et la tige (17) ; le corps (18) du bouton (10) comporte deux logements (19,20) qui reçoivent chacun un ressort (21,22), l'ouverture de ces logements (19,20) vient en regard d'une platine (23), montée coaxialement à l'axe (17) du bouton (10) et qui est pourvu de deux logements (24,25) qui sont conçus pour des billes (26,27), et ce de manière à ce que les billes (26,27) s'engagent en partie égale dans les logements (19,20) du bouton (10) et dans les logements (24,25) de la platine (23).

2. Dispositif selon la revendication 1 caractérisé par le fait
que les logements (24,25) conçus dans la platine (23) comportent un plan incliné (29) qui, lorsque le bouton (10) est en rotation et que la force des ressorts (21,22) n'est pas suffisante par rapport au couple exercé sur le bouton (10), permet auxdites billes (26,27) de sortir des logements (24,25) de la platine et de désolidariser ainsi le bouton (10) de la platine (23) ; le bouton (10) est ainsi débrayé et tourne à vide.

3. Dispositif selon la revendication 2 caractérisé par le fait
qu'une vis de réglage (28) prévue entre le bouton (10) et la platine (23) permet d'ajuster la force de serrage entre les deux pièces (10,23) et ce, en fonction de la force des ressorts (20,21).

## Patentansprüche

1. Vorrichtung zum Messen und Überwachen der Zugspannung eines Treibriemens bei konstanter Verformung unter Messung der auf ein Dehnungsmeßgerät mit fünf Kontaktpunkten (1, 2,3,4,5) ausgeübten Kraft, wobei drei Bezugspunkte (1,2,3) sich auf derselben Seite des Treibriemens befinden, nämlich der Kontaktpunkt (3) des mechanischen Teils des Dehnungsmeßgeräts und zwei Rollen bzw. feste Bezugspunkte (2,3), und der Kontaktpunkt (3) des mechanischen Teils des Dehnungsmeßgeräts zwischen den beiden Rollen (1,2) angeordnet ist, an der anderen Seite des Treibriemens zwei Anpreßfinger (4,5) so in bezug auf die Rollen (1,2) vorgesehen sind, daß der Treibriemen auf die Meßstellen zu liegen kommt, durch die Anpreßvorrichtung (7) und deren Anpreßfinger (4,5) ein konstanter Druck dadurch ausgeübt wird, daß erstere gleitend auf dem Körper (6) der Vorrichtung angeordnet ist und durch den Einstellknopf (10) der Presse (7) betätigt wird,
**dadurch gekennzeichnet**,
daß der genannte Knopf (10) mit einem einstellbaren Drehmomentbegrenzer zwischem dem Körper (18) des Knopfes (10) und dem Schaft (17) versehen ist, der Körper (18) des Knopfes (10) zwei Vertiefungen (19,20) jeweils zur Aufnahme einer Feder (21,22) aufweist, die Öffnung dieser Vertiefungen (19, 20) gegenüber einer Platine (23) zu liegen kommt, die koaxial zur Achse (17) des Knopfes (10) angeordnet und mit zwei Vertiefungen (24, 25) zur Aufnahme von Kugeln (26,27) versehen ist, dergestalt, daß die Kugeln (26, 27) zu gleichen Teilen in die Vertiefungen (19,20) des Knopfes (10) und in die Vertiefungen (24, 25) der Platine (23) eingreifen.

2. Vorrichtung nach Anspruch 1,
dadurch gekennzeichnet, daß die in der Platine (23) ausgebildeten Vertiefungen (24, 25) eine geneigte Ebene (29) aufweisen, die es den Kugeln (26, 27) ermöglicht, die Vertiefungen (24,25) der Platine zu verlassen und damit den Knopf (10) von der Platine (23) zu lösen, wenn der Knopf (10) sich dreht und die Kraft der Federn (21, 22) gegenüber dem auf den Knopf (10) ausgeübten Drehmoment nicht ausreicht, so daß der Knopf (10) sich im ausgerückten Zustand befindet und leer umläuft.

3. Vorrichtung nach Anspruch 2,
dadurch gekennzeichnet, daß eine zwischen dem Knopf (10) und der Platine (23) vorgesehene Einstellschraube (28) die Einstellung der Klemmkraft zwischen den beiden Stücken (10,23) in Abhängigkeit von der Kraft der Federn (20,21) ermöglicht.

## Claims

1. Apparatus for measuring and controlling the tension of a driving belt, making use of a constant deformation and measuring the force exerted on a strain gauge having five points of contact (1,2,3,4,5), three points of reference (1,2,3) being situated on the same side of the driving belt, namely contact point (3) of the mechanical part of the strain gauge and two rollers or fixed points of reference (2,3), and the contact point (3) of the mechanical part of the strain gauge being disposed between said two rollers (1,2), wherein, furthermore, two pressing fingers (4,5) are disposed on the other side of the driving belt in relation to the rollers (1,2) such that the driving belt is positioned on the measuring points, wherein a constant pressure is exerted by the pressing means (7) and its pressing fingers (4,5) by disposing the former so as to slide on the body (6) of the apparatus and having it actuated by the adjustment button (10) of the pressing means (7),
**characterized** in that
said button (10) is provided with an adjustable torque limiter between the body (18) of the button (10) and the shaft (17), the body (18) of the button (10) has two cavities (19,20) for receiving a spring (21,22), respectively, the opening of these cavities (19, 20) is located so as to face a bottom plate (23) disposed coaxially to the axis (17) of the button (10) and provided with two cavities (24, 25) for accommodating balls (26, 27) in such a manner that said balls (26, 27) engage in even parts the cavities (19, 20) of the button (10) and the cavities (24, 25) of the bottom plate (23).

2. The apparatus according to claim 1,
characterized in that the cavities (24, 25) formed in the bottom plate (23) have an inclined plane (29) which permits the balls (26,27) to exit the cavities (24, 25) of the bottom plate (23), thereby disengaging the button (10) from the bottom plate (23) if the button (10) turns and the force of the springs (21,22) is insufficient compared to the torque exerted on the button (10), so that the button (10) is in the disengaged state and idles.

3. The apparatus according to claim 2,
characterized in that an adjustment screw (28) provided between the button (10) and the bottom plate (23) facilitates regulation of the clamping force between the two pieces (10,23) in response to the force of the springs (20,21).
